# FASCICULE DE BREVET EUROPEEN

(11) **EP 0 737 172 B1**
(45) Date de publication et mention de la délivrance du brevet: **17.03.1999**
(21) Numéro de dépôt: 95903394.5
(22) Date de dépôt: 12.12.1994
(51) Int. Cl.: C04B 11/036, F27B 15/00

(54) **PROCEDE ET INSTALLATION DE PRODUCTION DE PLATRE A PARTIR DE GYPSE PAR CALCINATION PAR CONTACT DIRECT AVEC DES GAZ CHAUDS PORTEURS**
VERFAHREN UND VORRICHTUNG ZUR HERSTELLUNG VON ENTWÄSSERTEM GIPS DURCH KALZINIEREN IN DIREKTEM KONTAKT MIT HEISSEN TRÄGERGASEN
METHOD AND PLANT FOR PRODUCING PLASTER FROM GYPSUM BY CALCINING IN DIRECT CONTACT WITH HOT CARRIER GASES

(30) Priorité: 23.12.1993 FR 9315772
(43) Date de publication de la demande: 16.10.1996
(73) Titulaire: MACE HOLDING, 44805 Saint Herblain Cédex (FR)
(72) Inventeur: MOISSET, Jacques, F-84800 l'Isle-sur-Sorgue (FR); MACE, Patrick, F-44800 Saint-Herblain (FR)
(74) Mandataire: Tilloy, Anne-Marie
(86) Numéro de dépôt international: FR9401451
(87) Numéro de publication internationale: WO9517354

(56) Documents cités:
- DE-A- 1 940 007
- FR-A- 2 235 891

## Description

La présente invention concerne un procédé de production de plâtre semi-hydrate à partir de gypse naturel ou synthétique par calcination du gypse par contact direct avec des gaz chauds porteurs, essentiellement dans une ou plusieurs zones cycloniques.

La présente invention a également pour objet une installation pour la mise en oeuvre du procédé.

On connaît de nombreux procédés de calcination du gypse en plâtre semi-hydrate réalisé par contact direct avec des gaz chauds porteurs dans une ou plusieurs zones cycloniques.

Selon une première catégorie de procédés, la calcination du gypse s'effectue par circulation selon le sens ascendant et à co-courant des particules de matière à calciner et d'un gaz chaud. Un tel procédé est notamment décrit dans le brevet français n° 2235891. La matière à calciner et le gaz chaud sont introduits dans la partie inférieure de la zone cyclonique, le gaz injecté entraînant les particules de plus faible dimension dans une zone de dépoussiérage et de récupération desdites particules, tandis que les particules de plus grande dimension, non entraînées, sont, pour partie, acheminées vers la zone de broyage-démottage et que les particules de plus grande dimension restantes sont partiellement entraînées par le gaz chaud avec une succession de montées suivies de retours dans le bas du cyclone.

Cette première catégorie de procédés n'est pas pleinement satisfaisante en raison du retour des particules non entraînées vers des zones très chaudes où elles peuvent se transformer en anhydrite III dès qu'elles rencontrent des gaz à plus de 200° C et en anhydrite II dès qu'elles rencontrent des gaz à plus de 400° C. En outre, du fait des temps de cuisson des particules, qui peuvent être variables, irréguliers et difficiles à prévoir, la régularité de qualité du plâtre semi-hydrate risque d'être affectée, ce qui peut le rendre très difficile à utiliser (irrégularité des temps de prise, grande sensibilité à l'humidité).

La demande de brevet européen n°196372 décrit également un procédé de calcination du gypse par circulation selon le sens ascendant et à co-courant des particules de matière à calciner et d'un gaz chaud. Selon cette demande, le gypse est préchauffé avant calcination à l'aide des gaz sortant de la zone de calcination et des gaz de refroidissement préalablement chauffés par échange thermique avec une partie du produit cuit sortant de la zone de calcination, tandis que l'autre partie du produit partiellement cuit est recyclé dans la zone de calcination. De l'avis des spécialistes dans le domaine technique en cause, une telle manière d'opérer risque fort d'aboutir à un produit fini contenant des pourcentages variables de gypse, plâtre semi-hydrate, anhydrite III et anhydrite II : un tel produit fini est, bien sûr, difficilement utilisable dans l'industrie du plâtre à cause de ses variations de temps de prise. Les risques d'aboutir à un tel produit fini sont, en outre, accentués par les températures préconisées dans cette demande, à savoir une température entre 148,9° C et 343,3° C dans la zone de calcination et une température du produit partiellement calciné comprise entre 121,1° C et 204,4° C.

Selon une seconde catégorie de procédés, la calcination du gypse s'effectue à co-courant selon le sens descendant des particules de matière à calciner et d'un gaz chaud. Un tel procédé est notamment décrit dans les brevets français n° 2056689, n° 2221418, n° 2261997, le brevet belge n° 790039 et le brevet américain US 3,752,455. La matière à calciner et le gaz chaud sont introduits dans la partie supérieure de la zone cyclonique et la matière calcinée est récupérée en bas des cyclones. Dès lors, une telle façon d'opérer ne permet pas d'éviter la récupération en bas des cyclones de grosses particules imparfaitement cuites, qui, après broyage, donnent des quantités variables de gypse accélérateur dans le plâtre semi-hydrate.

Afin d'atténuer ce risque de pollution du plâtre semi-hydrate produit par le gypse restant, le brevet français n° 2261997 prévoit une opération d'affinage de la matière sortant du cyclone de calcination afin d'obtenir, autant que possible, la transformation totale des particules les plus grosses de la matière non encore complètement transformée.

A propos du brevet américain US 3,752,455, on remarque par ailleurs que, outre une circulation selon le sens descendant et à co-courant, des particules de matière à calciner et d'un gaz chaud ayant servi à préchauffer cette matière, il est prévu un apport d'énergie pour les besoins de la calcination par des brûleurs qui débitent des gaz très chauds directement dans le cyclone. De la sorte, on crée de très fortes différences de température d'un point à l'autre de la partie supérieure du cyclone de calcination. C'est pourquoi, lorsqu'on désire produire du plâtre semi-hydrate, ce procédé crée aussi, en même temps, des conditions pour produire de l'anhydrite III et de l'anhydrite II (ou surcuit) en quantités variables. Un tel procédé n'est, par conséquent, pas adapté à la production d'un plâtre semi-hydrate de qualité régulière.

Enfin, le procédé décrit dans le brevet US 3,752,455 comprend une opération de préchauffage par chute de la matière dans un flux ascendant de gaz chaud qui, de ce fait, préchauffe plus les fines particules de la matière que les grosses particules, ce qui risque encore d'aggraver les risques de production d'un plâtre semi-hydrate irrégulier en favorisant la transformation partielle des fines particules en anhydrite III et en anhydrite II.

La présente invention vise à remédier aux inconvénients précités. Plus précisément, la présente invention a pour objet un procédé de calcination du gypse naturel ou synthétique en plâtre semi-hydrate, à la fois simple et rapide, qui garantisse la production d'un plâtre semi-hydrate de qualité régulière, exempt de gypse et d'anhydrite II et quasiment exempt d'anhydrite III.

A cet effet, il est proposé un procédé de production de plâtre semi-hydrate par calcination du gypse naturel ou synthétique dans au moins une zone cyclonique comprenant, dans sa partie supérieure, en position centrale, un conduit de sortie, cette calcination pouvant être précédée, si nécessaire, d'une opération de broyage-démottage du gypse. Ce procédé est : défini dans les revendications 1 à 16.

La récupération du plâtre semi-hydrate produit par le procédé selon l'invention se fait généralement dans un ensemble de dépoussiérage des gaz chauds.

Le procédé selon l'invention convient plus particulièrement à la production de plâtre semi-hydrate bêta.

Contrairement à la pratique la plus courante qui consiste à faire passer par le haut des cyclones un minimum de matière à l'état de poussières, le procédé selon l'invention préconise le passage par le haut des cyclones de la totalité des particules de matière devant se transformer en plâtre semi-hydrate et ceci, en grande quantité.

Un exemple de la pratique courante est illustré par DE-A-1940007.

Conformément au procédé selon l'invention :
- la température des gaz chauds mis en contact avec les particules de matière à calciner est homogène, c'est-à-dire que, dans une section perpendiculaire à une veine de gaz chauds entraînant des particules qui ont été introduites en même temps à l'entrée de chaque zone cyclonique, la température des gaz est sensiblement la même en tout point de cette section. Ainsi, on évite le contact des particules à calciner avec des gaz trop chauds ou trop froids conduisant à la présence respectivement d'anhydrite ou de gypse dans le plâtre semi-hydrate produit l'homogénéité de température dans la veine de gaz chauds est simplement obtenue en créant un mouvement turbulent dans les gaz chauds avant leur mise en contact avec les particules à calciner).
- chaque zone cyclonique de calcination, plus particulièrement la première, assure à la fois la calcination des particules de gypse ainsi que le tri entre les particules de gypse transformées en plâtre semi-hydrate et les particules de gypse insuffisamment cuites, grâce au réglage de la zone de coupure de chaque zone cyclonique. En effet, simplement en arrêtant la géométrie et les dimensions des différentes parties de chaque cyclone et les conditions de dépression ménagées dans les cyclones, on détermine la zone de coupure des cyclones, c'est-à-dire la granulométrie maximale des particules de matière devant être entraînées par les gaz porteurs chauds. Ainsi, par un simple réglage des conditions de température à l'entrée et à la sortie de la zone de calcination en fonction de la zone de coupure des cyclones, on parvient à éviter l'entraînement dans les gaz chauds des particules trop grosses qui risquent de ne pas être cuites à coeur et qui sont avantageusement récupérées à la sortie prévue en bas des cyclones. Dès lors, on évite dans le plâtre semi-hydrate, la présence, en quantité difficilement contrôlable, de restes de gypse accélérateur ou des risques de déshydratation et de réhydratation alternés donnant des caractéristiques variables à ce plâtre, en particulier des temps de prise variables.
- le parcours suivi par l'ensemble des particules de matière à calciner dans la zone de calcination, qui sont finalement recueillies sous forme de plâtre semi-hydrate, est uniforme et sans risque de retour des particules vers des zones plus chaudes que celles qu'elles viennent de quitter. Le plâtre semi-hydrate obtenu est, dès lors, quasiment exempt de particules d'anhydrite III et exempt d'anhydrite II. En outre, grâce au temps de séjour uniforme des particules dans la zone de calcination, le plâtre semi-hydrate recueilli est régulier en qualité.

C'est pourquoi, le plâtre semi-hydrate obtenu par le procédé selon la présente invention apporte une régularité de qualité supérieure à celle des produits obtenus par les procédés de calcination connus précités.

A titre de matière première pouvant être introduite dans la zone de broyage-démottage, on peut prévoir du gypse naturel pré-concassé ou du gypse chimique (i.e. synthétique) ou un mélange des deux, ainsi que, le cas échéant, les grosses particules précuites rejetées à la sortie basse des cyclones de calcination, parce que trop grosses pour avoir été cuites correctement.

Avantageusement ;
- la température des gaz chauds lors de leur introduction dans la partie supérieure de la première zone cyclonique (relativement au sens de circulation des gaz chauds) est comprise entre 400° C et 1200° C (inclus), de préférence entre 500° C et 1000° C (inclus), de préférence encore entre 600° C et 800° C (inclus).
- la température au plâtre semi-hydrate, à sa sortie prévue dans la partie supérieure de la dernière zone cyclonique (relativement au sens de circulation des gaz chauds), par l'intermédiaire du conduit central de sortie et juste avant son entrée dans le dépoussiéreur, est inférieure à 200° C, de préférence inférieure ou égale à 165° C, de préférence encore comprise entre 145° C et 165° C.
- la courbe granulométrique du gypse, avant sa transformation en plâtre semi-hydrate, est telle que le plâtre semi-hydrate obtenu ait la courbe granulométrique permettant un gâchage normal, sans avoir à le rebroyer. Dans un ordre de préférence allant en croissant, la granulométrie maximale du gypse, avant sa transformation en plâtre semi-hydrate, est au plus égale à 2 mm, voire au plus égale à 1 mm.
- la zone de coupure de chaque zone cyclonique est telle que au moins 98 % du produit entraîné par les gaz ont des dimensions de grains au plus égale à 1 mm, de préférence au plus égale à 800 microns, de préférence encore au plus égale à 600 microns. En outre, il est recommandé de prévoir la même zone de coupure pour chaque zone cyclonique d'une même installation de calcination.
- les particules de matières à calciner sont préchauffées à une température ne permettant pas leur transformation en plâtre semi-hydrate, de préférence au plus 120° C. Le préchauffage est avantageusement effectué par échange thermique avec les fumées chaudes et dépoussiérées produites par le présent procédé.

Partant des valeurs de température et de granulométrie précitées, il sera aisé, pour l'homme de la technique considérée, de sélectionner par de simples opérations de routine, avec éventuellement l'aide du fabricant des cyclones, les cyclones de calcination adéquats (en particulier, choix des dimensions de l'enceinte de cuisson et de celles du conduit central de sortie prévu dans leur partie supérieure) ainsi que les conditions de dépression à ménager à l'intérieur des cyclones pour assurer la circulation des particules de matière, le temps de séjour et l'entraînement par le haut des cyclones des particules de matière de granulométrie acceptable pour leur transformation en plâtre semi-hydrate.

Selon un mode préféré de réalisation de l'invention, une partie importante des gaz récupérés en sortie de la dernière zone cyclonique de calcination (relativement au sens de circulation des gaz chauds) est acheminée, après dépoussiérage, vers le générateur des gaz chauds utiles à la calcination du gypse en plâtre semi-hydrate. Le fait que seuls des gaz dépoussiérés soient recyclés permet, d'une part, d'éviter de polluer (de façon mesurable) le produit final en particules fines de matière qui pourrait se transformer en anhydrite II lors de leur second passage dans la zone de calcination, et, d'autre part, d'augmenter l'humidité des gaz chauds produits par le générateur, la présence de cette humidité permettant de minimiser les risques de formation d'anhydrite III. De préférence, les gaz chauds, à leur entrée dans la partie supérieure de la première zone cyclonique de calcination, contiennent au moins 250 g d'eau par kilogramme de gaz sec, et encore mieux, au moins 400 g d'eau par kilogramme de gaz sec. Ainsi, on limite encore les chances de transformation de la matière à calciner en anhydrite III.

Selon une première forme d'exécution de l'invention, la calcination est conduite dans un cyclone de calcination unique. A cette première forme d'exécution de l'invention, on combinera avantageusement l'une ou plusieurs des variantes préférées précitées.

Selon une autre forme d'exécution de l'invention, qui constitue la forme préférée d'exécution de l'invention, la calcination est conduite dans deux cyclones de calcination disposés en série, ci-après désignés premier et second cyclones relativement au sens de circulation des gaz chauds. A cette seconde forme d'exécution de l'invention, on combinera avantageusement l'une ou plusieurs des variantes préférées précitées. Avantageusement, le procédé est, dans ce cas, conduit de la manière suivante : après l'opération de broyage-démottage, les particules de gypse sont soumises à une opération de séparation, d'une part des grosses particules et, d'autre part, des particules fines, les grosses particules étant introduites dans la partie supérieure du premier cyclone tandis que les particules fines sont introduites dans la partie supérieure du second cyclone et mélangées aux particules grosses sortant par le haut du cyclone précédent. De préférence encore, la granulométrie maximale des particules fines introduites directement dans la partie supérieure de la seconde zone cyclonique est comprise entre 100 et 200 microns (inclus).

Egalement, le procédé selon la présente invention peut aussi être conduit dans trois cyclones (ou plus) de calcination, les particules fines de gypse étant introduites dans la partie supérieure du dernier cyclone (relativement au sens de circulation des gaz chauds) tandis que les grosses particules de gypse sont :
- soit introduites dans la partie supérieure du premier cyclone,
- soit introduites par fraction de granulométrie décroissante respectivement dans la partie supérieure du premier cyclone, du second cyclone et ainsi de suite jusqu'à l'avant-dernier cyclone.

La présente invention a également pour objet une installation pour la mise en oeuvre du procédé selon l'invention, cette installation étant définie dans la revendication 17.

Un broyeur à marteaux ou à doigts peut parfaitement convenir à titre d'appareil de broyage-démottage du gypse, à condition que la dimension maximale des particules de gypse à l'entrée de cet appareil lui soit adaptée. Dans le cas où la matière première est du gypse chimique, cet appareil pourra, si nécessaire, également jouer le rôle de démotteur-sécheur, si la teneur en humidité du gypse chimique est supérieure à 5 % en poids. Pour ce faire, on recycle avantageusement des fumées chaudes dépoussiérées vers cet appareil pour améliorer le pré-séchage. Toutefois, à la différence de certains procédés connus qui prévoient le passage des gaz chauds, sortant d'un générateur de gaz chauds, à travers l'appareil de broyage-démottage du gypse, la température des fumées chaudes dépoussiérées et recyclées pouvant traverser cet appareil sont nettement moins élevées et au plus égale à 180° C. L'utilisation d'un appareil spécial de broyage-démottage du gypse, capable de résister à des températures très élevées n'est alors pas indispensable dans le procédé selon l'invention. En outre, si le débit de production l'exige, on peut avantageusement prévoir plusieurs appareils de broyage-démottage en parallèle pour alimenter une seule zone de calcination. En revanche, l'augmentation de la production horaire des procédés connus prévoyant la traversée de l'appareil de broyage-démottage par des gaz chauds sortant du générateur des gaz chauds, oblige à mettre une autre installation complète en parallèle, du fait que à chaque appareil de broyage-démottage ne peut correspondre qu'une zone de calcination unique.

A titre de générateur des gaz chauds comprenant, de préférence, des moyens garantissant une température homogène des gaz chauds avant leur mise en contact avec le gypse à calciner, on prévoit avantageusement des moyens capables de créer suffisamment de turbulences à la sortie du générateur de préférence dans une chambre de mélange des gaz chauds et de gaz de température inférieure permettant d'obtenir la température désirée à la sortie de la chambre de mélange. Le recyclage éventuel des fumées chaudes de cheminée, après dépoussiérage, peut se faire au niveau de la sortie du générateur de gaz chauds, dans un ensemble permettant un bon mélange des gaz de combustion et des fumées chaudes ou, de préférence, dans l'enveloppe du générateur de gaz chauds, juste à la sortie de la chambre de combustion et avant une chambre de mélange interne au générateur de gaz chauds.

Comme indiqué précédemment, les cyclones de calcination sont calculés de telle façon que la coupure granulométrique se fasse à la dimension maximale des particules acceptable pour obtenir le plâtre semi-hydrate en sortie de l'installation. Dans le cadre du procédé selon l'invention, le temps de séjour des particules dans la zone de calcination, c'est-à-dire le temps de contact entre les gaz chauds et les particules de matière dans les cyclones de calcination, les conduites de liaison entre les cyclones et l'appareil de séparation et dépoussiérage, ainsi que dans l'appareil de séparation et dépoussiérage proprement dit dans lequel le plâtre semi-hydrate produit est recueilli, peut varier de préférence :
- de 6 à 8 secondes dans le cas du procédé utilisant un cyclone de calcination unique ;
- de 6 à 8 secondes pour les particules fines et de 10 à 14 secondes pour les particules les plus grosses dans le cas du procédé utilisant deux cyclones de calcination consécutifs avec introduction directe des particules fines en mélange avec les particules plus grosses partiellement calcinées sortant de la première zone cyclonique dans la partie supérieure de la seconde zone cyclonique, ce qui permet de cuire correctement les grosses particules sans surcuire les particules fines ;

- un appareil de séparation et dépoussiérage des gaz chauds sortant du dernier cyclone pour la récupération du plâtre semi-hydrate produit, cet appareil devant être apte à entretenir une dépression suffisante à l'intérieur du ou des cyclones et des conduites de liaisons prévues entre les différents appareils pour permettre la récupération du plâtre semi-hydrate dans la partie supérieure du dernier cyclone par l'intermédiaire du conduit central de sortie. A cet effet, cet appareil comprend généralement un ventilateur d'aspiration ou tout autre moyen convenable pour entretenir une dépression suffisante, associé à un système de dépoussiérage par voie électrostatique ou à un dépoussiéreur à manches ou à panneaux équipé des protections nécessaires pour éviter les colmatages et les surchauffes, précédé ou non d'un cyclone de séparation, les matières collectées à la sortie de ces deux appareils (i.e. dépoussiéreur et cyclone de séparation) devant alors être soigneusement remélangées, par exemple dans une vis commune.
- un appareil de récupération du plâtre semi-hydrate produit à la sortie des matières de l'appareil de séparation et dépoussiérage tels que une vis collectrice, une chaîne transporteuse, un convoyeur à écailles et tout autre moyen de récupération convenable.
- éventuellement, des moyens pour le convoyage des grosses particules récupérées dans la partie inférieure de chaque cyclone vers l'appareil de broyage-démottage, tels que des vis, des aéro-glissières, des convoyeurs à godets et tout autre moyen de convoyage convenable.
- éventuellement, des moyens pour l'acheminement des gaz chauds et dépoussiérés, récupérés dans l'appareil de séparation-dépoussiérage vers le générateur des gaz chauds et/ou vers l'appareil de broyage-démottage, tels que un ventilateur et tout autre moyen d'acheminement convenable.
- éventuellement, des moyens prévus en amont du ou des cyclones de calcination pour séparer les grosses particules de gypse des fines particules de gypse (tels que des tamis vibrants, des aéro-séparateurs et tout autre moyen de séparation convenable) suivis d'un moyen de convoyage des grosses particules pour leur introduction dans la partie supérieure du premier cyclone et d'un moyen de convoyage des fines particules pour leur introduction dans la partie supérieure du dernier cyclone, ces moyens de convoyage pouvant être du même type que ceux précités pour le convoyage des grosses particules récupérées dans la partie inférieure des cyclones.

Outre la régularité de la qualité du plâtre semi-hydrate produit, les avantages du procédé et de l'installation selon la présente invention sont de permettre :
- une fabrication simplifiée et économique de plâtre semi-hydrate. En effet, grâce à l'invention, l'emploi d'appareils spéciaux et coûteux à l'investissement peut être évité.
- une production horaire, pouvant atteindre 40 à 60 tonnes de plâtre semi-hydrate par heure, voire plus selon les dimensions de l'installation.

Le plâtre semi-hydrate obtenu grâce au procédé selon l'invention convient parfaitement en tant que plâtre de construction. Il est en outre particulièrement adapté à la préfabrication de produits tels que les carreaux de plâtre et les plaques de plâtre.

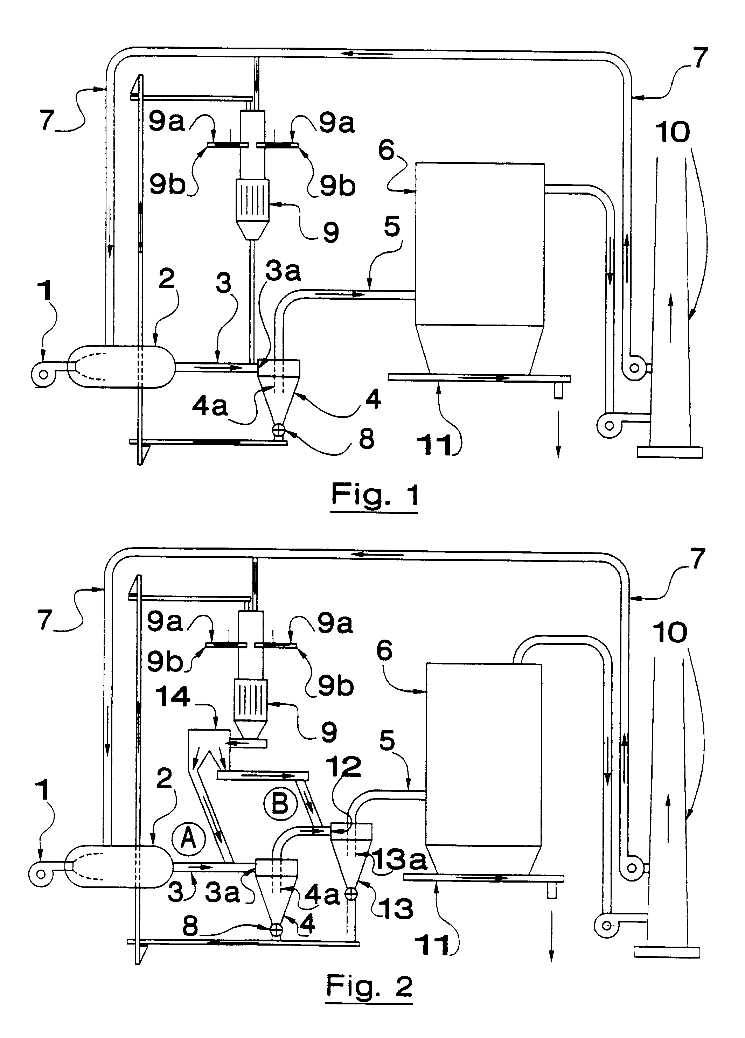

D'autres caractéristiques et avantages de l'invention apparaîtront à la lecture des exemples qui vont suivre et des figures sur lesquelles on a représenté :
- en figure 1, une installation comprenant une zone cyclonique unique de calcination ;
- en figure 2, une installation comprenant deux zones cycloniques de calcination en série.

### 1er exemple dans une installation à zone cyclonique unique (se reporter à la figure 1)

L'installation représentée sur la figure 1 comporte deux trémies d'alimentation (9a) en gypse naturel, prébroyé ou synthétique et deux transporteurs-doseurs (9b) d'amenée du gypse à un ensemble classique de broyage (9) dans lequel se produisent un broyage complémentaire et un démottage et éventuellement un préséchage.

Le gypse de pureté comprise entre 85 et 95 % est broyé dans l'appareil de broyage-démottage (9) de façon à ce que toutes les particules passent au tamis de 2 mm. Le gypse est ensuite introduit dans la zone de calcination (4) par l'intermédiaire de la conduite de liaison (3) à raison de 48,4 tonnes par heure. Ce gypse est injecté dans la veine gazeuse homogène sortant de la chambre de mélange du générateur de gaz chauds (2) à 800° C juste à l'entrée (3a) du haut du cyclone de cuisson (4). L'entrée des particules de gypse et des gaz chauds se fait tangentiellement dans le cyclone (4) et autour du conduit central de sortie (4a).

Le cyclone (4) est calculé de façon à éliminer vers le bas (8) les particules de plus de 800 µm (ce qui représente environ 1000 kg par heure de particules rejetées par le bas du cyclone (4)) qui n'auraient pas le temps de cuire au cours du passage unique préconisé dans un tel procédé. En effet, le temps de cuisson à coeur des particules de 800 µm est de près de 8 secondes alors que le temps de séjour réel dans la zone de calcination de l'installation exemplifiée, avant dépoussiérage, n'est que de 6 secondes Il faut compter sur le temps de séjour du produit dans l'appareil de dépoussiérage (6) et sa vis de soutirage (11) (qui font partie de l'installation) pour terminer la cuisson de telles particules. Le plâtre semi-hydrate recueilli dans la vis de soutirage (11) est envoyé dans les silos de stockage.

Les particules de matière entraînées par les gaz chauds sortent du cyclone (4) par l'intermédiaire du conduit central de sortie (4a) prévu dans la partie supérieure du cyclone (4).

Dans cette installation, on utilise une partie des gaz dépoussiérés (7) avant leur évacuation par la cheminée (10) pour refroidir à 800° C les gaz de chauffage sortant du brûleur (1) dans le générateur (2) de gaz chauds. Les gaz chauds à l'entrée (3a) du cyclone de cuisson (4) contiennent de l'ordre de 250 g d'eau par kg de gaz secs et de l'ordre de 410 g d'eau par kg de gaz secs à la sortie du cyclone (4). C'est pourquoi, dans le cas où les particules fines de gypse se transforment en partie en anhydrite III, le séjour dans l'appareil de dépoussiérage (6) avec des gaz chauds contenant 410 g d'eau par kg de gaz secs et dans la vis de soutirage (11) permet de transformer réversiblement l'anhydrite III en plâtre semi-hydrate.

La température des gaz à l'entrée du dépoussiérage (6) est régulée à 160°C en jouant sur le débit de combustible dans le brûleur (1) à l'entrée du générateur de gaz chauds (2).

L'installation produit, dans ces conditions, 40 tonnes par heure d'un produit ne contenant que des traces d'anhydrite III, d'anhydrite II et de gypse résiduel.

Le fonctionnement de l'installation décrite dans cet exemple peut être amélioré en diminuant la dimension des particules extraites à la sortie basse (8) du cyclone (4).

### 2ème exemple dans une installation à zone cyclonique unique (se reporter à la figure 1)

Le gypse de pureté comprise entre 85 et 95 % est broyé dans l'appareil de broyage-démottage (9) de façon à ce que toutes les particules passent au tamis de 2 mm. Le gypse est ensuite introduit dans la zone de calcination (4) par l'intermédiaire de la conduite de liaison (3) à raison de 49,32 tonnes par heure. Ce gypse est injecté dans la veine gazeuse homogène sortant de la chambre de mélange du générateur de gaz chauds (2) à 600° C juste à l'entrée (3a) du haut du cyclone de cuisson (4). L'entrée des particules de gypse et des gaz chauds se fait tangentiellement dans le cyclone (4) et autour du conduit central de sortie (4a).

Le cyclone (4) est calculé de façon à éliminer vers le bas (8) les particules de plus de 600 µm (ce qui représente un peu moins de 2000 kg par heure de particules rejetées par le bas du cyclone (4)) qui n'auraient pas le temps de cuire au cours du passage unique préconisé dans un tel procédé. Le temps de cuisson à coeur des particules de 600 µm est de près de 6 secondes alors que le temps de séjour réel dans la zone de calcination de l'installation exemplifiée, avant dépoussiérage, est lui aussi de 6 secondes. Il n'est plus nécessaire de compter sur le temps de séjour du produit dans l'appareil de dépoussiérage (6) et sa vis de soutirage (11) pour terminer la cuisson de telles particules.

Les particules de matière entraînées par les gaz chauds sortent du cyclone (4) par l'intermédiaire du conduit de sortie (4a) prévu dans la partie supérieure du cyclone (4).

Dans cette installation, on utilise une partie des gaz chauds et dépoussiérés (7) avant leur évacuation par la cheminée (10) pour refroidir à 600° C les gaz de chauffage dans le générateur (2) de gaz chauds.

Les gaz chauds à l'entrée (3a) du cyclone de cuisson (4) contiennent de l'ordre de 330 g d'eau par kg de gaz secs et de l'ordre de 450 g d'eau par kg de gaz secs à la sortie du cyclone (4). Ainsi, très peu de particules fines de gypse seront transformées en anhydrite III. En outre, elles seront facilement toutes transformées réversiblement en plâtre semi-hydrate avant la sortie du cyclone de cuisson (4) car, en cette partie du circuit, les gaz contiennent de l'ordre de 450 g d'eau par kg de gaz secs, ce qui est en dehors de la zone de stabilité de l'anhydrite III.

La température des gaz à l'entrée du dépoussiéreur (6) est régulée à 160° C en jouant sur le débit de combustible dans le brûleur (1) à l'entrée du générateur de gaz chauds (2).

L'installation produit, dans ces conditions, 40 tonnes par heure d'un produit ne contenant pas d'anhydrite III, d'anhydrite II, ni de gypse résiduel.

### 3e exemple dans une installation à deux zones cycloniques en série (se reporter à la figure 2)

L'installation représentée sur la figure 2 comporte deux trémies d'alimentation (9a) en gypse naturel, prébroyé ou synthétique et deux transporteurs-doseurs (9b) d'amenée du gypse à un ensemble classique de broyage (9) dans lequel se produisent un broyage complémentaire et un démottage et éventuellement un préséchage.

Le gypse de pureté comprise entre 85 et 95 % est broyé dans l'appareil de broyage-démottage (9) de façon à ce que seules les particules de gypse de dimension inférieure à 2 mm soient introduites dans le sélecteur (14) à raison de 48 tonnes par heure. Ce gypse est séparé dans le sélecteur (14) en deux tranches : la tranche "A" de granulométrie comprise entre 2 mm-150 µm est injectée dans la veine gazeuse homogène sortant du générateur de gaz chauds (2) à 800° C juste à l'entrée (3a) du haut du premier cyclone de cuisson (4). Elle représente environ 30 % du gypse introduit dans le procédé. L'entrée des particules de gypse et des gaz chauds se fait tangentiellement dans le cyclone (4) et autour du conduit central de sortie (4a).

Le cyclone (4) est calculé de façon à éliminer vers sa sortie basse (8) les particules de plus de 950 µm (ce qui représente environ 1000 kg/heure de particules rejetées par le bas du cyclone (4)) qui n'auraient pas le temps de finir de cuire à coeur dans le second cyclone parce qu'ils demanderaient plus de 11 secondes de temps de contact avec des gaz chauds pour y parvenir. Les particules entraînées par les gaz chauds, après un séjour de 5 secondes dans le cyclone (4), en sortent par l'intermédiaire du conduit central de sortie (4a) prévu en position centrale dans la partie supérieure du cyclone (4) et continuent leur cuisson dans le second cyclone (13) pendant 6 secondes.

Les 70 % restant du gypse de granulométrie inférieure à 150 µm (tranche "B) sont introduits à l'entrée (12) du second cyclone (13). L'entrée des particules de matière à calciner et des gaz chauds se fait tangentiellement dans le cyclone (13) autour du conduit central de sortie (13a). Ils tombent dans un gaz à environ 610°C et contenant 300 g d'eau par kg de gaz chauds. Dans de telles conditions, bien que cuites en moins d'une seconde, peu de ces particules seront transformées en anhydrite III et, si tel est le cas, celles-ci seront transformées réversiblement en plâtre semi-hydrate avant leur sortie du cyclone (13) car, en cette partie du circuit, les gaz contiennent 410 g d'eau par kg de gaz secs, ce qui est pratiquement en dehors de la zone de stabilité de l'anhydrite III.

Les particules de matière entraînées par les gaz chauds sortent du cyclone (13) par l'intermédiaire du conduit central de sortie (13a) prévu dans la partie supérieure du cyclone (13).

La température des gaz à l'entrée du dépoussiéreur (6) est régulée à 160° C en jouant sur le débit de combustible au brûleur (1) du générateur de gaz chauds (2).

L'installation produit, dans ces conditions, 40 tonnes par heure d'un plâtre semi-hydrate ne contenant pas d'anhydrite III, d'anhydrite II, ni de gypse résiduel et permet d'obtenir un plâtre plus gros, ayant une demande en eau plus faible qu'un plâtre plus fin, à étalement égal, ce qui est intéressant pour son utilisation en préfabrication car cela permet des économies sur le séchage du produit fini.

## Revendications

1. Procédé de production de plâtre semi-hydrate par calcination du gypse naturel ou synthétique dans au moins une zone cyclonique, comprenant, dans sa partie supérieure, en position centrale, un conduit de sortie, cette calcination pouvant être précédée, si nécessaire, d'une opération de broyage-démottage du gypse,
**procédé selon lequel :**
(a) l'introduction du gypse et des gaz chauds est effectuée dans la partie supérieure de la première zone cyclonique (relativement au sens de circulation des gaz chauds), la température des gaz chauds introduits étant homogène ;
(b) après leur mise en contact avec les gaz chauds, les particules de matière ne peuvent rencontrer qu'un gaz de température inférieure ou égale à celle du gaz avec lequel elles viennent d'être mises en contact ;
**et caractérisé en ce que :**
(c) la calcination est conduite dans un courant parallèle des gaz chauds et des particules de matières à déshydrater par circulation selon le sens descendant suivant un mouvement cyclonique dans chaque zone cyclonique et ensuite par circulation dans la zone centrale de chaque zone cyclonique selon le sens ascendant, en direction du conduit central de sortie de chaque zone cyclonique puis à l'intérieur de ce conduit ;
(d) la zone de coupure de chaque zone cyclonique est réglée pour permettre la récupération du plâtre semi-hydrate désiré par le conduit central de sortie situé dans la partie supérieure de la dernière zone cyclonique (relativement au sens de circulation des gaz chauds) ;
(e) les particules non entraînées par les gaz chauds parce qu'elles sont trop grosses et risquent de contenir du gypse résiduel à coeur, sont évacuées dans la partie inférieure de chaque zone cyclonique et sont, de préférence, retournées vers la zone de broyage-démontage.

2. Procédé selon la revendication 1, caractérisé en ce que la température des gaz chauds lors de leur introduction dans la partie supérieure de la première zone cyclonique est comprise entre 400° C et 1200° C (inclus).

3. Procédé selon la revendication 2, caractérisé en ce que la température des gaz chauds lors de leur introduction dans la partie supérieure de la première zone cyclonique est comprise entre 500° C et 1000° C (inclus).

4. Procédé selon la revendication 3, caractérisé en ce que la température des gaz chauds lors de leur introduction dans la partie supérieure de la première zone cyclonique est comprise entre 600° C et 800° C (inclus).

5. Procédé selon l'une quelconque des revendications 1 à 4, caractérisé en ce que la température du plâtre semi-hydrate, à la sortie prévue dans la partie supérieure de la dernière zone cyclonique, par l'intermédiaire du conduit central de sortie et juste avant son entrée dans le dépoussiéreur est inférieure à 200° C.

6. Procédé selon la revendication 5, caractérisé en ce que la température du plâtre semi-hydrate, à la sortie prévue dans la partie supérieure de la dernière zone cyclonique, par l'intermédiaire du conduit central de sortie et juste avant son entrée dans le dépoussiéreur est inférieure ou égale à 165° C.

7. Procédé selon la revendication 6, caractérisé en ce que la température du plâtre semi-hydrate, à la sortie prévue dans la partie supérieure de la dernière zone cyclonique, par l'intermédiaire du conduit central de sortie et juste avant son entrée dans le dépoussiéreur est comprise entre 145° C et 165° C.

8. Procédé selon l'une quelconque des revendications **1 à 7**, caractérisé en ce que la granulométrie maximale du gypse, avant sa transformation en plâtre semi-hydrate, est au plus égale à 2 mm.

9. Procédé selon la revendication **8**, caractérisé en ce que la granulométrie maximale du gypse, avant sa transformation en plâtre semi-hydrate, est au plus égale à 1 mm.

10. Procédé selon l'une quelconque des revendications **1 à 9**, caractérisé en ce que la zone de coupure de chaque zone cyclonique est telle que au moins 98 % du produit entraîné par les gaz ont des dimensions de grains au plus égale à 1 mm, de préférence au plus égale à 800 microns, de préférence encore, au plus égale à 600 microns.

11. Procédé selon l'une quelconque des revendications **1 à 10**, caractérisé en ce qu'une partie importante des gaz récupérés en sortie de la dernière zone cyclonique est acheminée, après dépoussiérage, vers le générateur des gaz chauds utiles à la calcination du gypse en plâtre semi-hydrate.

12. Procédé selon l'une quelconque des revendications **1 à 11**, caractérisé en ce que les gaz chauds, à leur entrée dans la partie supérieure de la première zone cyclonique de calcination, contiennent au moins 250 g d'eau par kilogramme de gaz sec et de préférence au moins 400 g d'eau par kilogramme de gaz sec.

13. Procédé selon l'une quelconque des revendications **1 à 12**, caractérisé en ce que la calcination est conduite dans une zone cyclonique unique.

14. Procédé selon l'une quelconque des revendications **1 à 12**, caractérisé en ce que la calcination est conduite dans deux zones cycloniques disposées en série.

15. Procédé selon la revendication **14**, caractérisé en ce que, après l'opération de broyage-démottage, les particules de gypse sont soumises à une opération de séparation d'une part des grosses particules et d'autre part des particules fines, les grosses particules étant introduites dans la partie supérieure de la première zone cyclonique tandis que les particules fines sont introduites dans la partie supérieure de la seconde zone cyclonique, en mélange avec les grosses particules précalcinées sortant par le haut de la première zone cyclonique.

16. Procédé selon la revendication 15, caractérisé en ce que les particules fines sont les particules dont la granulométrie maximale est comprise entre 100 et 200 microns (inclus).

17. Installation pour la mise en oeuvre du procédé selon l'une quelconque des revendications 1 à 16, caractérisée en ce qu'elle comporte :
- au moins un appareil de broyage-démottage (9) du gypse;
- un générateur des gaz chauds (2) comprenant, de préférence, des moyens garantissant une température homogène des gaz chauds avant leur mise en contact avec le gypse à calciner ;
- au moins un cyclone (4) pour la calcination du gypse en plâtre semi-hydrate, le gypse broyé et les gaz chauds étant introduits dans la partie supérieure du premier cyclone, chaque cyclone comprenant, en outre :
• une entrée (3a) des particules de gypse et des gaz chauds se faisant tangentiellement dans sa partie supérieure autour du conduit central de sortie (4a) des gaz chauds porteurs et,
• une sortie (8) dans sa partie inférieure pour les grosses particules qui ne sont pas entraînées par les gaz chauds porteurs,
• une sortie (4a) dans sa partie supérieure pour les gaz chauds porteurs et les particules de matières entraînées par les gaz chauds porteurs par le conduit central de sortie (4a), la sortie (4a), prévue dans la partie supérieure du dernier cyclone, par l'intermédiaire du conduit central de sortie, étant la sortie des gaz chauds porteurs et des particules de matières entraînées correspondant à la totalité du plâtre semi-hydrate produit par l'installation ;
- un appareil de séparation et de dépoussiérage (6) des gaz chauds sortant du dernier cyclone, relié à la sortie (4a) prévue dans la partie supérieure du dernier cyclone et permettant de recueillir les particules de plâtre semi-hydrate produit, cet appareil (6) comprenant des moyens pour entretenir une dépression suffisante à l'intérieur du ou des cyclones et des conduites de liaisons prévues entre les différents appareils et entraîner les particules de matière à transformer en plâtre semi-hydrate lesdits moyens étant associés à un système de dépoussiérage des gaz chauds porteurs et de collecte du plâtre semi-hydrate produit ;
- un appareil (11) de récupération du plâtre semi-hydrate produit relié à la sortie de l'appareil de séparation et dépoussiérage (6) ;
- éventuellement, des moyens pour le convoyage des grosses particules récupérées dans la partie inférieure de chaque cyclone pour recyclage vers l'appareil de broyage-démottage ;
- éventuellement, des moyens pour l'acheminement des gaz chauds et dépoussiérés, récupérés dans l'appareil de séparation-dépoussiérage vers le générateur des gaz chauds et/ou vers l'appareil de broyage-démottage ;
- éventuellement, des moyens prévus en amont du ou des cyclones de calcination pour séparer les grosses particules de gypse des fines particules de gypse suivis à d'un moyen de convoyage des grosses particules pour leur introduction dans la partie supérieure du premier cyclone et d'un moyen de convoyage des fines particules pour leur introduction dans la partie supérieure du dernier cyclone.

## Patentansprüche

1. Verfahren zur Herstellung von Halbhydrat-Gips durch Kalzination von natürlichem oder synthetischem Gips in wenigstens einer Zyklonierzone, die in ihrem oberen Teil in zentraler Position eine Ausgangsleitung umfaßt, und dieser Kalzination, falls nötig, eine Zerkleinerungs-Entklumpungs-operation des Gipses vorausgehen kann;
**wobei dieses Verfahren darin besteht:**
(a) daß das Einführen des Gipses und der heißen Gase in dem oberen Teil der ersten Zyklonierzone (bezogen auf die Zirkulationsrichtung der heißen Gase) erfolgt, wobei die Temperatur der eingeleiteten heißen Gase gleichmäßig ist;
(b) daß die Materialteilchen nach ihrem Kontakt mit den heißen Gasen nur noch auf Gas mit einer Temperatur treffen können, die niedriger oder gleich der Temperatur des Gases ist, mit dem sie Kontakt hatten;
**und dadurch gekennzeichnet ist:**
(c) daß das Kalzinieren durchgeführt wird in einem parallelen Strom der heißen Gase und der zu entwässernden Materialteilchen durch eine abwärtsgerichtete Zirkulation entsprechend einer Zyklonbewegung in jeder Zyklonierzone, und anschließend durch eine aufwärtsgerichtete Zirkulation in der zentralen Zone jeder Zyklonierzone, in Richtung der zentralen Ausgangsleitung jeder Zyklonierzone, dann im Innern dieser Leitung;
(d) daß die Trennzone jeder Zyklonierzone geregelt wird, um die Gewinnung des gewünschten halbydraten Gips es durch die zentrale Ausgangsleitung zu ermöglichen, die sich im oberen Teil der letzten Zyklonierzone (bezogen auf die Zirkulationsrichtung der heißen Gase) befindet;
(e) daß die Teilchen, die durch die heißen Gase nicht mitgenommen werden, da sie zu groß sind und Restkerngips enthalten könnten, im unteren Teil jeder Zyklonierzone ausgeschieden werden und vorzugsweise zu der Zerkleinerungs-Entklumpungszone zurückgeleitet werden.

2. Verfahren nach Anspruch 1, dadurch gekennzeichnet, daß die Temperatur der heißen Gase bei ihrer Einleitung in den oberen Teil der ersten Zyklonierzone enthalten ist zwischen 400°C und 1200°C (einschließlich).

3. Verfahren nach Anspruch 2, dadurch gekennzeichnet, daß die Temperatur der heißen Gase bei ihrer Einleitung in den oberen Teil der ersten Zyklonierzone enthalten ist zwischen 500°C und 1000°C (einschließlich).

4. Verfahren nach Anspruch 3, dadurch gekennzeichnet, daß die Temperatur der heißen Gase bei ihrer Einleitung in den oberen Teil der ersten Zyklonierzone enthalten ist zwischen 600°C und 800°C (einschließlich).

5. Verfahren nach einem der Ansprüche 1 bis 4, dadurch gekennzeichnet, daß die Temperatur des halbhydraten Gips es kurz vor seinem Eintritt in den Staubabscheider an dem Ausgang, der in dem oberen Teil der letzten Zyklonierzone mittels der zentralen Ausgangsleitung vorgesehen ist, niedriger als 200°C ist.

6. Verfahren nach Anspruch 5, dadurch gekennzeichnet, daß die Temperatur des halbhydraten Gipses, kurz vor seinem Eintritt in den Staubabscheider an dem Ausgang, der in dem oberen Teil der letzten Zyklonierzone mittels der zentralen Ausgangsleitung vorgesehen ist, niedriger als oder gleich 165°C ist.

7. Verfahren nach Anspruch 6, dadurch gekennzeichnet, daß die Temperatur des halbhydraten Gipses kurz vor seinem Eintritt in den Staubabscheider an dem Ausgang, der in dem oberen Teil der letzten Zyklonierzone mittels der zentralen Ausgangsleitung vorgesehen ist, zwischen 145°C und 165°C enthalten ist.

8. Verfahren nach einem der Ansprüche 1 bis 7, dadurch gekennzeichnet, daß die maximale Granulometrie bzw. Korngröße des Gipses vor seiner Umwandlung in Halbhydrat-Gips höchstens gleich 2mm beträgt.

9. Verfahren nach Anspruch 8, dadurch gekennzeichnet, daß die maximale Granulometrie bzw. Korngröße des Gipses vor seiner Umwandlung in Halbhydrat-Gips höchstens gleich 1mm beträgt.

10. Verfahren nach einem der Ansprüche 1 bis 9, dadurch gekennzeichnet, daß die Trennzone jeder Zyklonierzone derartig ist, daß wenigstens 98% des durch die Gase mitgeführten Produkts eine Granulometrie bzw. Korngröße von höchstens lmm oder besser von höchstens 800µm oder noch besser von höchstens 600µm aufweisen.

11. Verfahren nach einem der Ansprüche 1 bis 10, dadurch gekennzeichnet, daß ein großer Teil des am Ausgang der letzten Zyklonierzone wiedergewonnenen Gases nach Entstaubung zurückgeleitet wird zu dem Generator der heißen Gase, die dazu benutzt werden, den Gips zu halbhydrat-Gips zu kalzinieren.

12. Verfahren nach einem der Ansprüche 1 bis 11, dadurch gekennzeichnet, daß die heißen Gase bei ihrem Eintritt in den oberen Teil der ersten Kalzinationszyklonierzone wenigstens 25Og Wasser pro Kilogramm Trockengas enthält und vorzugsweise wenigstens 4OOg Wasser pro Kilogramm Trockengas.

13. Verfahren nach einem der Ansprüche 1 bis 12, dadurch gekennzeichnet, daß das Kalzinieren in einer einzigen Zyklonierzone erfolgt.

14. Verfahren nach einem der Ansprüche 1 bis 12, dadurch gekennzeichnet, daß das Kalzinieren in zwei in Serie angeordneten Zyklonierzonen erfolgt.

15. Verfahren nach Anspruch 14, dadurch gekennzeichnet, daß nach der Zerkleinerungs-Entklumpungsoperation die Gipsteilchen einer Trennoperation in einerseits grobe Teilchen und andererseits feine Teilchen unterzogen werden, wobei die groben Teilchen in den oberen Teil der ersten Zyklonierzone eingeführt werden, während die feinen Teilchen in den oberen Teil der zweiten Zyklonierzone eingeführt werden, zum Mischen mit den vorkalzinierten groben Teilchen, die die erste Zykonierzone oben verlassen.

16. Verfahren nach Anspruch 15, dadurch gekennzeichnet, daß die feinen Teilchen Teilchen sind, deren maximale Granulometrie bzw. Korngröße enthalten ist zwischen 100 und 200µm (einschließlich).

17. Vorrichtung zur Durchführung des Verfahrens nach einem der Ansprüche 1 bis 16, **dadurch gekenzeichnet**, daß sie umfaßt:
- wenigstens ein Zerkleinerungs-Entklumpungsgerät (9) des Gipses;
- einen Heißgas-Generator (2), vorzugweise mit Einrichtungen, die eine gleichmäßige Temperatur der heißen Gase vor ihrem Kontakt mit dem zu kalzinierenden Gips garantieren;
- wenigstens einen Zyklon (4) zum Kalzinieren des Gipses zu Halbhydrat-Gips, wobei der zerkleinerte Gips und die heißen Gase in den oberen Teil des ersten Zyklons eingeführt werden und jeder Zyklon außerdem umfaßt:
• einen tangentialen Eingang (3a) für die Gipsteilchen und die heißen Gase in seinen Oberteil, um die zentrale Ausgangsleitung (4a) der heißen Trägergase herum, und
• einen Ausgang (8) in seinem Unterteil für die groben Teilchen, die von den heißen Trägergasen nicht mitgenommen werden,
• einen Ausgang (4a) in seinem Oberteil für die heiße Trägergase und die Materialteilchen, die von den heißen Trägergasen durch die zentrale Ausgangsleitung (4a) mitgenommen werden, wobei der Ausgang (4a), vorgesehen in dem Oberteil des letzten Zyklons mittels der zentralen Ausgangsleitung, der Ausgang der heißen Trägergase und der mitgenommenen Teilchen ist, die der Gesamtheit des durch die Vorrichtung halbhydraten Gipses entsprechen;
- ein Trenn-und Entstaubungsgerät (6) der den letzten Zyklon verlassenden heißen Gase, verbunden mit dem Ausgang (4a), vorgesehen im Oberteil des letzten Zyklons, das ermöglicht, die hergestellten halbhydraten Gipsteilchen zu sammeln, wobei dieses Gerät (6) Einrichtungen umfaßt, um im Innern des Zyklons oder der Zyklone und der zwischen den verschiedenen Geräten bzw. Einrichtungen vorgesehenen Verbindungsleitungen einen ausreichenden Unterdruck aufrechtzuerhalten und um die in halbhydrat-Gips zu verwandelnden Materialteilchen mitzunehmen, wobei die genannten Einrichtungen mit einem System zum Entstauben der heißen Trägergase und zum Sammeln des erzeugten halbhydraten Gipses verbunden sind;
- eine Einrichtung (11) zum Sammeln des hergestellten halbhydraten Gipses, verbunden mit dem Ausgang des Trenn- und Entstaubungsgeräts (6);
- eventuell Fördereinrichtungen zur Rückführung der in dem Unterteil jedes Zyklons gesammelten groben Teilchen zu dem Zerkleinerungs-und Entklumpungsgerät;
- eventuell Einrichtungen, um die heißen Gase und die Staubteilchen, gesammelt in dem Trenn- und Entstaubungsgerät, zurückzuleiten zum Heißgasgenerator und/oder zum ZerkleinerungsEntklumpungsgerät;
- eventuell Einrichtungen, die vor dem Zyklon oder den Zyklonen vorgesehen sind, um die groben Gipsteilchen von den feinen Gipsteilchen zu trennen, gefolgt von einer Fördereinrichtung für die groben Gipsteilchen, um sie in den Oberteil des ersten Zyklons einzuspeisen, und einer Fördereinrichtung für die feinen Gipsteilchen, um sie in den Oberteil des letzten Zyklons einzuspeisen.

## Claims

1. Method for the production of hemihydrate plaster by the calcination of natural or synthetic gypsum in at least one cyclonic area, comprising, in its upper part, in the central position, an outlet pipe, this calcination being able to be preceded, if necessary, by an operation for grinding/lump removal of the gypsum,
a method according to which:
(a) the introduction of the gypsum and of the hot gases is carried out in the upper part of the first cyclonic area (relative to the direction of circulation of the hot gases), the temperature of the hot gases introduced being homogeneous;
(b) after they have been brought into contact with the hot gases, the particles of material are able to encounter solely a gas at a temperature less than or equal to that of the gas with which they have just been brought into contact;
and characterised in that:
(c) the calcination is carried out in a parallel flow of the hot gases and of the particles of material to be dehydrated by circulation in the descending direction according to a cyclonic movement in each cyclonic area and then by circulation in the central area of each cyclonic area in the ascending direction, in the direction of the central outlet pipe of each cyclonic area, then inside this pipe;
(d) the cut-off area of each cyclonic area is regulated in order to allow the desired recovery of the hemihydrate plaster by the central outlet pipe situated in the upper part of the last cyclonic area (relative to the direction of circulation of the hot gases);
(e) the particles which are not entrained by the hot gases because they are too large and risk containing residual gypsum in their interior, are evacuated in the lower part of each cyclonic area and are, preferably, returned to the grinding/lump removal area.

2. Method according to Claim 1, characterised in that the temperature of the hot gases at the time of their introduction into the upper part of the first cyclonic area is between 400°C and 1200°C (inclusive).

3. Method according to Claim 2, characterised in that the temperature of the hot gases at the time of their introduction into the upper part of the first cyclonic area is between 500°C and 1000°C (inclusive).

4. Method according to Claim 3, characterised in that the temperature of the hot gases at the time of their introduction into the upper part of the first cyclonic area is between 600°C and 800°C (inclusive).

5. Method according to one of Claims 1 to 4, characterised in that the temperature of the hemihydrate plaster, at the outlet provided in the upper part of the last cyclonic area, through the intermediary of the central outlet pipe and just before its entry into the dust remover is less than 200°C.

6. Method according to Claim 5, characterised in that the temperature of the hemihydrate plaster, at the outlet provided in the upper part of the last cyclonic area, through the intermediary of the central outlet pipe and just before its entry into the dust remover is less than or equal to 165°C.

7. Method according to Claim 6, characterised in that the temperature of the hemihydrate plaster, at the outlet provided in the upper part of the last cyclonic area, through the intermediary of the central outlet pipe and just before its entry into the dust remover is between 145°C and 165°C.

8. Method according to one of Claims 1 to 7, characterised in that the maximum grain size of the gypsum before its transformation into hemihydrate plaster, is at the most equal to 2 mm.

9. Method according to Claim 8, characterised in that the maximum grain size of the gypsum, before its transformation into hemihydrate plaster, is at the most equal to 1 mm.

10. Method according to one of Claims 1 to 9, characterised in that the cut-off area of each cyclonic area is such that at least 98% of the product entrained by the gases have dimensions of the grains at the most equal to 1 mm, preferably at the most equal to 800 microns, still preferably, at the most equal to 600 microns.

11. Method according to one of Claims 1 to 10, characterised in that an important part of the gases recovered at the outlet of the last cyclonic area is sent, after dust removal, to the generator for hot gases useful for the calcination of gypsum into hemihydrate plaster.

12. Method according to one of Claims 1 to 11, characterised in that the hot gases, at their entry into the upper part of the first cyclonic calcination area, contain at least 250 g water per kilogramme of dry gas and preferably at least 400 g water per kilogramme of dry gas.

13. Method according to one of Claims 1 to 12, characterised in that the calcination is carried out in a single cyclonic area.

14. Method according to one of Claims 1 to 12, characterised in that the calcination is carried out in two cyclonic areas arranged in series.

15. Method according to Claim 14, characterised in that, after the grinding/lump removal operation, the particles of gypsum are subject to an operation for the separation, on the one hand, of the large particles and on the other hand, of the fine particles, the large particles being introduced into the upper part of the first cyclonic area whereas the fine particles are introduced into the upper part of the second cyclonic area, mixed with the large pre-calcined particles leaving through the top of the first cyclonic area.

16. Method according to Claim 15, characterised in that the fine particles are the particles whereof the maximum grain size is between 100 and 200 microns (inclusive).

17. Installation for carrying out the method according to one of Claims 1 to 16, characterised in that it comprises:
- at least one grinding/lump removal apparatus (9) for the gypsum;
- a generator for hot gases (2) preferably comprising means guaranteeing a homogeneous temperature of the hot gases before they are brought into contact with the gypsum to be calcined;
- at least one cyclone (4) for the calcination of the gypsum to form hemihydrate plaster, the crushed gypsum and the hot gases being introduced into the upper part of the first cyclone, each cyclone furthermore comprising:
. an entry (3a) of the gypsum particles and hot gases taking place tangentially in its upper part about the central outlet pipe (4a) for the hot carrier gases and,
. an outlet (8) in its lower part for the large particles which are not entrained by the hot carrier gases,
. an outlet (4a) in its upper part for the hot carrier gases and the particles of materials entrained by the hot carrier gases through the central outlet pipe (4a), the outlet (4a), provided in the upper part of the last cyclone, through the intermediary of the central outlet pipe, being the outlet for the hot carrier gases and entrained material particles corresponding to all the hemihydrate plaster produced by the installation;
. an apparatus (6) for the separation and removal of dust from the hot gases leaving the last cyclone, connected to the outlet (4a) provided in the upper part of the last cyclone and making it possible to collect the particles of hemihydrate plaster produced, this apparatus (6) comprising means for maintaining an adequate reduced pressure inside the cyclone or cyclones and connection pipes provided between the various apparatus and entraining the particles of material to be transformed into hemihydrate plaster, the said means being associated with a system for removing dust from the hot carrier gases and for collecting the hemihydrate plaster produced;
- an apparatus (11) for recovering the hemihydrate plaster produced, connected to the outlet of the apparatus (6) for separation and dust removal;
- possibly, means for the conveyance of large particles recovered in the lower part of each cyclone for recycling towards the grinding/lump removal apparatus;
- possibly, means for sending the hot gases from which dust has been removed, which are recovered in the separation/dust removal apparatus, towards the hot gas generator and/or towards the grinding/lump removal apparatus;
- possibly, means provided upstream of the calcination cyclone or cyclones for separating the large particles of gypsum from the fine particles of gypsum followed by means for conveying large particles, for their introduction into the upper part of the first cyclone and by means for conveying fine particles, for their introduction into the upper part of the last cyclone.
